# EUROPÄISCHE PATENTSCHRIFT

(11) **EP 4 185 399 B1**
(45) Veröffentlichungstag und Bekanntmachung des Hinweises auf die Patenterteilung: **28.10.2026**
(21) Anmeldenummer: 21745939.5
(22) Anmeldetag: 08.07.2021
(51) Int. Cl.: B01D 53/85

(54) **BIOFILTER ZUR BIOLOGISCHEN REINIGUNG EINES STÖRSTOFFE AUFWEISENDEN ABGASSTROMS**
BIOFILTER FOR BIOLOGICALLY CLEANING A WASTE GAS STREAM CONTAINING CONTAMINANTS
BIOFILTRE POUR LE NETTOYAGE BIOLOGIQUE D'UN FLUX DE GAZ RÉSIDUAIRE CONTENANT DES CONTAMINANTS

(30) Priorität: 24.07.2020 DE 102020119628
(43) Veröffentlichungstag der Anmeldung: 31.05.2023
(73) Patentinhaber: HARTMANN BIOFILTER GMBH & CO. KG, 33165 Lichtenau (DE)
(72) Erfinder: HARTMANN, Christian, 33165 Lichtenau (DE); HARTMANN, Anton, 33165 Lichtenau (DE); HARTMANN, Magdalena, 33165 Lichtenau (DE); SIEGEL, Alessandro, 33165 Lichtenau (DE)
(74) Vertreter: Cohausz & Florack
(86) Internationale Anmeldenummer: PCT/EP2021/069036
(87) Internationale Veröffentlichungsnummer: WO 2022/017819

(56) Entgegenhaltungen:
- EP-A1- 3 015 157
- CN-A- 105 709 589
- DE-A1- 19 506 835
- DE-A1- 4 223 874
- KR-B1- 100 536 472
- KR-B1- 101 206 936

## Beschreibung

Die Erfindung betrifft einen Biofilter zur biologischen Reinigung eines Störstoffe aufweisenden Abgasstroms, mit wenigstens einem von dem Abgasstrom zu durchströmenden Filtermodul, wobei das Filtermodul wenigstens eine ein organisches Filtermaterial aufweisende Filterschicht aufweist und wobei die wenigstens eine Filterschicht von wenigstens einer wenigstens im Wesentlichen horizontal ausgerichteten, Gitterstruktur getragen ist.

Biofilter werden zur biologischen Reinigung von Abgasströmen eingesetzt, die biologisch abbaubare Störstoffe, wie geruchsintensive und/oder gesundheitsschädliche Stoffe, aufweisen. Bei den Störstoffen handelt es sich typischerweise um Stoffe, die bei gewöhnlichen Umgebungsbedingungen gasförmig sind. Dabei können mit Biofiltern neben sehr unterschiedlichen organischen Störstoffen bedarfsweise auch anorganische Störstoffe, wie insbesondere Ammoniak, in Abgasströmen biologisch abgebaut werden. Dies ermöglicht einen vielseitigen Einsatz von Biofiltern zur Reinigung von Abgasströmen, die meist in Form von Abluftströmen anfallen aber nicht müssen. So werden Biofilter etwa zur Reinigung von Abluftströmen aus Schlachthöfen oder Tierhaltungsanlagen, wie Tierställen, und von Abgasströmen von Räucherbetrieben, Kläranlagen, Verarbeitungsbetrieben von Farben und Lacken oder von Kunststoff verarbeitenden Betrieben eingesetzt.

Unabhängig von der Art des zu reinigenden Abgasstroms und der darin enthaltenen Störstoffe weisen Biofilter in aller Regel wenigstens ein Filtermodul auf, das von dem Abgasstrom durchströmt wird. Dabei durchströmt der Abgasstrom typischerweise wenigstens eine biologisch aktive Filterschicht des Filtermoduls, in der die Störstoffe biologisch abgebaut werden, und zwar durch Mikroorganismen, wie Bakterien, Pilze und/oder Hefen, die auf dem Filtermaterial der Filterschicht angesiedelt sind. Das Filtermaterial ist in der Regel ein organisches Material wie Rindenmulch oder Holzhackschnitzel, das den Mikroorganismen auch als Substrat dienen kann. Die Mikroorganismen setzen die Störstoffe typischerweise durch Oxidation mit Luftsauerstoff in andere Verbindungen, vorzugsweise Kohlendioxid und Wasser, um. Dabei ist die Aktivität der Mikroorganismen entscheidend von den in der Filterschicht vorherrschenden Bedingungen, wie unter anderem der Temperatur, des pH-Werts und des Nährstoffangebots, abhängig. Besondere Bedeutung kommt in diesem Zusammenhang dem Feuchtegehalt des Filtermaterials zu, da eine ausreichende Wasseraktivität im Filtermaterial eine Grundvoraussetzung für die mikrobiologischen Abbauprozesse ist.

Neben der Filterschicht weist das Filtermodul typischerweise wenigstens eine Gitterstruktur auf, die die Filterschicht trägt. Dabei ist die Gitterstruktur typischerweise wenigstens im Wesentlichen horizontal ausgerichtet, wobei die Filterschicht oberhalb der Gitterstruktur angeordnet ist. Häufig sind die Gitterstrukturen als Spaltenböden aus Beton aus Sieblochböden ausgebildet, die einerseits eine ausreichende Stabilität mit sich bringen, um das Gewicht der Filterschicht sicher tragen zu können, und andererseits eine gleichmäßige Durchströmung des Abgasstroms ermöglichen. Zudem sollen die Gitterstrukturen aber auch nicht zu leicht von dem Filtermaterial, beispielsweise durch feinere Bestandteile des Filtermaterials, die etwa beim Zersetzen des Filtermaterials durch die Mikroorganismen entstehen, lokal blockiert oder gar verstopft werden können, da dies eine ungleichmäßige Durchströmung des Filtermaterials zur Folge haben kann. Ungleichmäßig durchströmte Filtermaterialien neigen zudem zu lokaler Austrocknung, was die Leistungsfähigkeit des Biofilters insgesamt herabsetzt. Im Gegenzug soll die Gitterstruktur überschüssige Feuchtigkeit problemlos aus der Filterschicht nach unten abtropfen lassen und kostengünstig bereitgestellt werden können.

Dies sind nur einige Gründe dafür, dass mit bekannten Biofiltern den in Teilen widerstrebenden Anforderungen, hinsichtlich der Funktionalität, des Feuchtigkeitshaushalts, der Langlebigkeit, der Betriebskosten und der Herstellungskosten noch nicht in zufriedenstellendem Maße Rechnung getragen werden kann.

Die Dokumente KR100536472B1 und EP3015157A1 offenbaren beide gattungsgemäße Biofilter.

Daher liegt der vorliegenden Erfindung die Aufgabe zugrunde, den Biofilter der eingangs genannten und zuvor näher beschriebenen Art derart auszugestalten und weiterzubilden, dass der Biofilter kostengünstig, mit geringerem Aufwand und mit einem hohen Filterwirkungsgrad über einen möglichst langen Zeitraum betrieben werden kann.

Diese Aufgabe wird durch einen Biofilter gemäß Anspruch 1 gelöst.

Indem die Gitterstruktur durch die wenigstens im Wesentlichen über Kreuz und aufeinander angeordneten länglichen Gitterelemente gebildet ist, können die durch die Gitterstruktur gebildeten Gitteröffnungen bei ausreichend großer Stabilität der Gitterstruktur größer ausgebildet werden. So kann sichergestellt werden, dass es nicht oder jedenfalls nicht so schnell zum Zusetzten bzw. Blockieren von Teilbereichen der Gitterstruktur und mithin zu einer stark inhomogenen Durchströmung der Filterschicht kommt. Auf diese Weise kann der Biofilter länger bei hohem Wirkungsgrad betrieben werden, ohne dass eine Reinigung der Gitteröffnungen oder ein Austausch des Filtermaterials der Filterschicht erforderlich ist.

Je nach dem Volumenstrom des zu reinigenden Abgases kann es ausreichen, wenn der Biofilter lediglich ein Filtermodul aufweist. Bei höheren Volumenströmen kann der Biofilter aber auch mehrere, insbesondere gleichartig ausgebildete, Filtermodule aufweisen. Dabei sind die Filtermodule dann bevorzugt parallel geschaltet, so dass die Filtermodule parallel von dem Abgasstrom durchströmt werden. Auf diese Weise kann bedarfsweise auch ein Ausfall eines Filtermoduls kompensiert werden, beispielsweise aufgrund von Wartungsarbeiten, ohne dass der Abgasstrom ungereinigt in die Umgebung gelangt.

Die Filterschicht weist wenigstens ein organisches Filtermaterial auf. Organische Filtermaterialien bieten gegenüber anorganischen Filtermaterialien den Vorteil, dass sie bereits von Natur aus eine hohe Besiedelungsdichte und eine große Artenvielfalt an Mikroorganismen aufweisen und zudem als Nährstoffquelle für die Mikroorganismen dienen, was den Aufwand zur Inbetriebnahme und zum Betrieb des Biofilters verringert. Dabei kann die wenigstens eine Filterschicht neben dem wenigstens einen organischen Filtermaterial grundsätzlich auch noch ein oder mehrere anorganische Filtermaterialien, wie beispielsweise Blähton oder Lava aufweisen. Aus dem vorstehend genannten Grund ist es jedoch besonders bevorzugt, wenn die wenigstens eine Filterschicht wenigstens im Wesentlichen aus dem wenigstens einen organischen Filtermaterial gebildet ist.

Die wenigstens eine Filterschicht ist durch die wenigstens eine Gitterstruktur getragen. Dabei wird eine einfache und zugleich stabile Konstruktion der Gitterstruktur ermöglicht, da die wenigstens eine Gitterstruktur wenigstens im Wesentlichen horizontal ausgerichtet ist. Dann kann sich die Gitterstruktur wenigstens im Wesentlichen parallel zum Boden des Filtermoduls erstrecken und es kann die Bauhöhe des Biofilters gering gehalten werden. Alternativ oder zusätzlich kann die Gitterstruktur einfach konstruiert werden, wenn die Filterschicht oberhalb der Gitterstruktur angeordnet ist.

Die die Gitterstruktur bildenden Gitterelemente sind jeweils länglich ausgebildet. Dabei wird unter einer länglichen Ausbildung eines Gitterelements insbesondere verstanden, dass die Erstreckung des Gitterelements entlang dessen Längsrichtung wenigstens 2-mal, vorzugsweise wenigstens 5-mal, insbesondere wenigstens 10-mal, so groß ist wie die Erstreckung des Gitterelements in jeder der zu der Längsrichtung senkrecht ausgerichteten Querrichtungen, mithin insbesondere der Breite und der Höhe. Unabhängig von der länglichen Ausbildung der Gitterelemente sind diese jeweils für sich genommen wenigstens im Wesentlichen horizontal ausgerichtet.

Dann können die Gitterelemente jeweils wenigstens im Wesentlichen parallel zum Boden des Filtermoduls ausgerichtet sein. Dies kann sich positiv auf den für den Aufbau der Gitterstruktur erforderlichen Aufwand auswirken. Aus demselben Grund kann es sich alternativ oder zusätzlich auch anbieten, wenn die Gitterelemente jeweils, insbesondere entlang der Längsachse, einen wenigstens im Wesentlichen konstanten Querschnitt aufweisen.

Grundsätzlich kann es ausreichend sein, wenn das Filtermodul lediglich eine Filterschicht aufweist. In vielen Fällen kann es zur Erzielung eines ausreichenden Abscheidegrads aber bevorzugt sein, wenn das Filtermodul wenigstens zwei Filterschichten aufweist, die nacheinander von dem Abgasstrom durchströmt werden. Dabei ist es aus konstruktiver Sicht vorteilhaft, wenn die Filterschichten übereinander angeordnet sind. Dann kann der Abgasstrom die Filterschichten zweckmäßig in vertikaler Richtung nacheinander, insbesondere von unten nach oben, durchströmen. Unabhängig davon kann es zweckmäßig sein, wenn die Filterschichten jeweils durch eine Gitterstruktur getragen sind. Dabei sind, aus den vorstehend genannten Gründen, die Gitterstrukturen jeweils durch wenigstens im Wesentlichen über Kreuz angeordnete längliche Gitterelemente gebildet.

Die Gitterelemente der wenigstens einen Gitterstruktur sind jeweils lattenförmig und balkenförmig ausgebildet. Gitterelemente in Form von Latten und Balken ermöglichen aufgrund ihrer Geometrie eine einfache Konstruktion der Gitterstruktur und stellen zudem ein hohes Flächenträgheitsmoment bereit. Dabei lassen sich Latten und Balken aufgrund deren typischerweise rechteckigen Querschnitts zweckmäßig aufeinanderlegen. Balken bieten zudem den Vorteil, dass sie aufgrund ihres größeren Querschnitts besonders stabil sind.

Zum schnellen und einfachen Herstellen der Gitterstruktur sind die Gitterelemente der Gitterstruktur untereinander wenigstens im Wesentlichen unverbunden Die Gitterelemente können dann einfach aufeinandergelegt werden.

Die Gitterelemente der wenigstens einen Gitterstruktur sind aus Holz und/oder einem Holzwerkstoff gebildet.

Dabei wird unter einem Holzwerkstoff insbesondere ein solcher verstanden, der wenigstens überwiegend aus Holzstücken, Holzspänen oder Holzfasern gebildet ist. Wenn die Gitterelemente dagegen aus Holz bzw. Vollholz gebildet sind, können diese der Einfachheit halber als Schnitthölzer ausgebildet sein. Schnittholz kann besonders einfach und kostengünstig durch Sägen eines Holzstamms oder eines Holzstammabschnitts wenigstens im Wesentlichen parallel zur Stammachse hergestellt werden. Dabei kann es sich bei dem Holz insbesondere um ein Nadelholz handeln. Nadelhölzer werden durch die in dem Filtermodul angesiedelten Mikroorganismen weniger schnell zersetzt als Laubhölzer und haben mithin eine längere Standzeit als Laubhölzer. Als Nadelholz bietet sich insbesondere Tannenholz und/oder Fichtenholz an. Diese unterliegen einer besonders langsamen Zersetzung. Aus demselben Grund kann alternativ oder zusätzlich vorgesehen sein, dass der Holzwerkstoff wenigstens im Wesentlichen aus einem Nadelholz, insbesondere aus Tannenholz und/oder Fichtenholz, gebildet ist.

Unabhängig von der Ausgestaltung der Gitterelemente kann es sich anbieten, wenn die wenigstens eine Gitterstruktur aus wenigstens zwei Gitterlagen gebildet ist. So kann auf einfache Weise eine besonders stabile Gitterstruktur bereitgestellt werden, indem einfache Gitterlagen gedoppelt oder noch öfter übereinander vorgesehen werden. Außerdem steigt so die innere Oberfläche der Gitterstruktur an, die an der biologischen Umsetzung des Abgasstroms nicht unerheblich beteiligt sein kann. Aus Stabilitätsgründen kann die Gitterstruktur sich aus wenigstens drei, insbesondere wenigstens vier, Gitterlagen zusammensetzen.

Unabhängig von der Anzahl der Gitterlagen werden die Gitterlagen jeweils durch über Kreuz angeordnete längliche Gitterelemente gebildet.

Auch dies kann sehr einfach zu einer hohen Stabilität der Gitterstruktur beitragen. Zusätzlich sind die Gitterlagen der Einfachheit halber aufeinander angeordnet. Unabhängig davon trägt es auch zu einem einfachen Aufbau des Biofilters bei, dass die Gitterlagen jeweils wenigstens im Wesentlichen horizontal ausgebildet sind. Dann können sich die Gitterlagen jeweils wenigstens im Wesentlichen parallel zum Boden des Filtermoduls erstrecken.

Zum einfachen Aufbau der Gitterstruktur trägt es auch bei, dass die Gitterelemente der wenigstens einen Gitterstruktur einander wenigstens im Wesentlichen in einem rechten Winkel kreuzen. Dann beträgt also der Winkel zwischen den Gitterelementen, die sich kreuzen, wenigstens im Wesentlichen 90°. Auf eine exakt rechtwinklige Anordnung wird es aber in vielen Fällen nicht ankommen. Geringe Abweichungen können toleriert werden, so lange von einer insgesamt im Wesentlichen rechtwinkligen Anordnung Gebrauch gemacht wird. Sofern die Gitterstruktur aus mehreren Gitterlagen gebildet ist, bietet es sich aus demselben Grund an, wenn die Gitterelemente jeder Gitterlage einander wenigstens im Wesentlichen rechtwinklig kreuzen.

Damit der Abgasstrom ungehindert durch die Gitterstruktur strömen kann, bietet es sich an, wenn innerhalb der wenigstens einen Gitterstruktur in vertikaler Richtung gesehen Gitteröffnungen vorgesehen sind. Sofern die Gitterstruktur aus mehreren Gitterlagen gebildet ist, können aus demselben Grund alternativ oder zusätzlich auch innerhalb der Gitterlagen entsprechende Gitteröffnungen vorgesehen sein. Um dabei ein Zusetzten der Gitteröffnungen, etwa durch zunehmend verrottendes Filtermaterial, mit der Zeit möglichst effektiv zu vermeiden, ist es vorteilhaft, wenn die Gitteröffnungen jeweils eine Breite und/oder Länge von wenigstens 10 cm aufweisen. Besonders zuverlässig kann das Zusetzten der Gitteröffnungen vermieden werden, wenn die Breite und/oder Länge der Gitteröffnungen wenigstens 15 cm, insbesondere wenigstens 20 cm, beträgt. Dabei kann es grundsätzlich ausreichen, wenn die Gitteröffnungen eine entsprechende minimale Breite oder entsprechende minimale Länge aufweisen. Aus dem genannten Grund ist es jedoch besonders bevorzugt, wenn die Gitteröffnungen eine entsprechende minimale Breite und eine entsprechende minimale Länge der vorgenannten Abmessungen aufweisen.

In diesem Fall weisen die Gitteröffnungen jeweils eine Breite und/oder Länge von höchstens 120 cm auf, um das Filtermaterial zuverlässig über einen langen Zeitraum tragen zu können. Dies kann umso mehr der Fall sein, wenn die Breite und/oder die Länge der Gitteröffnungen höchstens 80 cm, insbesondere höchstens 60 cm, beträgt. Dabei ist es aus den genannten Gründen besonders bevorzugt, wenn die Gitteröffnungen eine entsprechende maximale Breite und eine entsprechende maximale Länge, jeweils der vorgenannten Abmessungen aufweisen.

Für eine hohe Stabilität der Gitterstruktur und eine gleichmäßige Durchströmung der Filterschicht kann es zweckmäßig sein, wenn die Gitterelemente wenigstens 20 Vol.-% des Volumens der wenigstens einen Gitterstruktur einnehmen. Aus demselben Grund ist es besonders bevorzugt, wenn der Anteil des Volumens der Gitterelemente an dem Volumen der wenigstens einen Gitterstruktur wenigstens 30 Vol.-%, insbesondere wenigstens 35 Vol.-%, beträgt. In diesem Fall nehmen die Gitterelemente aus denselben Gründen höchstens 70 Vol.-% des Volumens der wenigstens einen Gitterstruktur ein. Dies gilt umso mehr, wenn der Volumenanteil der Gitterelemente an dem Volumen der wenigstens einen Gitterstruktur höchstens 60 Vol.-%, insbesondere höchstens 55 Vol.-%, beträgt.

Die Gitterelemente der wenigstens einen Gitterstruktur können jeweils eine Länge von wenigstens 80 cm aufweisen. So kann der für den Aufbau der Gitterstruktur erforderliche Aufwand gering gehalten werden. Dies gilt umso mehr, wenn die Länge der Gitterelemente wenigsten 120 cm, insbesondere wenigstens 160 cm, beträgt. Hinsichtlich eines einfachen Handlings der Gitterelemente beim Aufbau der Gitterstruktur weisen die Gitterelemente der wenigstens einen Gitterstruktur in diesem Fall jeweils eine Länge von höchstens 10 m auf.

Ein besonders einfaches Handling kann dabei erreicht werden, wenn die Länge der Gitterelemente höchstens 8 m, insbesondere höchstens 6 m, beträgt.

Unabhängig von der Länge der Gitterelemente können die Gitterelemente der wenigstens einen Gitterstruktur aus Stabilitätsgründen jeweils eine Dicke von wenigstens 1 cm aufweisen. Gleichzeitig wird so die Langlebigkeit der Gitterelemente gesteigert, wenn die Gitterelemente aus einem organischen Material, wie Holz oder einem Holzwerkstoff gebildet sind. Aus diesen Gründen ist es besonders bevorzugt, wenn die Dicke der Gitterelemente wenigstens 2 cm, insbesondere wenigstens 3 cm, beträgt. Unabhängig davon kann es sich aus den vorgenannten Gründen auch anbieten, wenn die Gitterelemente der wenigstens einen Gitterstruktur jeweils eine Breite von wenigstens 5 cm aufweisen. Dabei kann es weiter bevorzugt sein, wenn die Breite der Gitterelemente wenigstens 10 cm, insbesondere wenigstens 15 cm, beträgt.

Des einfachen Handlings halber und zur Begrenzung des die Stabilität einschränkenden Eigengewichts weisen die Gitterelemente der wenigstens einen Gitterstruktur jeweils eine Dicke von höchstens 15 cm auf. Noch zweckmäßiger kann es in diesem Zusammenhang sein, wenn die Dicke der Gitterelemente höchstens 10 cm, insbesondere höchstens 5 cm, beträgt. Unabhängig von der Dicke der Gitterelemente weisen die Gitterelemente der wenigstens einen Gitterstruktur aus den zuvor genannten Gründen jeweils eine Breite von höchstens 80 cm auf.

Dabei kann es besonders zweckmäßig sein, wenn die Breite der Gitterelemente höchstens 60 cm, insbesondere höchstens 40 cm, beträgt.

Dabei wird bedarfsweise unter der Dicke eines Gitterelements dessen geringste Erstreckung im Querschnitt des Gitterelements verstanden. Alternativ oder zusätzlich kann die Breite eines Gitterelements dessen Erstreckung in einem Querschnitt senkrecht zu der geringsten Erstreckung des Gitterelements in diesem Querschnitt sein. Bei einem quadratischen oder kreisförmigen Querschnitt wären die Dicke und die Breite eines Gitterelements in diesem Fall wenigstens in etwa gleich groß.

Hinsichtlich der wenigstens einen Filterschicht ist es einfach und zweckmäßig, wenn diese als Schüttschicht ausgebildet ist, in der insbesondere das Filtermaterial in einem losen Verbund vorliegt. Dann kann die wenigstens eine Filterschicht in einfacher Weise durch Schütten des Filtermaterials hergestellt werden. Alternativ oder zusätzlich kann es sich hinsichtlich der Filterschicht anbieten, wenn das Filtermaterial der wenigstens einen Filterschicht Holzhackschnitzel, insbesondere Nadelholzhackschnitzel, Rindenmulch, Fasertorf, Kokosfasern, gerissenes Wurzelholz, Bioabfallkompost, Heidekraut, Holzwolle und/oder Holzpellets umfasst. Diese Materialien eignen sich hinsichtlich Oberfläche, Besiedlung durch Mikroorganismen und Abbaubarkeit besonders als Filtermaterial. Dabei sind Holzhackschnitzel und vor allem Nadelholzhackschnitzel besonders bevorzugt, da sie einer vergleichsweise langsamen Verrottung unterliegen, was sich positiv auf die Standzeit der Filterschicht auswirkt. Das Filtermaterial kann gleichmäßig durchströmt werden und zugleich eine hohe spezifische Oberfläche bereitstellen, wenn der obere Siebschnitt oder die maximale Partikelgröße bei nicht größer als 6 cm, vorzugsweise nicht größer als 5 cm, insbesondere nicht größer als 4 cm ist.

Unabhängig von der Ausbildung der Gitterstruktur und der Filterschicht kann es vorteilhaft sein, wenn zwischen der wenigstens einen Filterschicht und der wenigstens einen Gitterstruktur eine Stützschicht vorgesehen ist, die die Filterschicht oberhalb der Gitterstruktur abstützt und ein übermäßiges Hindurchrutschen des Filtermaterials der Filterschicht durch die Gitteröffnungen der Gitterstruktur verhindert. Dies gilt insbesondere dann, wenn die Gitterstruktur große Gitteröffnungen aufweist. Da die Gitterstruktur bereits eine hinreichende Stabilität bereitstellen kann, kann die Stützschicht weniger steif und dafür in hohem Maße durchlässig für den Abgasstrom sein. Dies kann dann bevorzugt durch eine Vielzahl verhältnismäßig kleiner Durchlassöffnungen erreicht werden. So wird sichergestellt, dass der Abgasstrom die Stützschicht ungehindert durchströmen kann, ohne dass das Filtermaterial übermäßig durch die Stützschicht hindurchrieselt. Dabei sind die Durchlassöffnungen vorteilhafterweise so ausgestaltet, dass feine, etwa durch die Mikroorganismen zersetzte, Bestandteile des Filtermaterials der Filterschicht die Stützschicht passieren können. Diese sehr feinen Fraktionen des Filtermaterials, deren Anteil an der Filterschicht mit der Zeit normalerweise anwächst, können das Filtermaterial lokal zusetzen, so dass die Durchströmung der Filterschicht zunehmend ungleichmäßig wird. Können diese feinen Fraktionen des Filtermaterials jedoch durch die Durchlassöffnungen der Stützschicht hindurchrieseln oder aus der Filterschicht mit überschüssiger Feuchtigkeit ausgewaschen werden, lässt sich eine ungleichmäßige Durchströmung des Filtermaterials vermeiden. Vor diesem Hintergrund kann es vorteilhaft sein, wenn die Durchlassöffnungen jeweils eine Länge und/oder Breite von wenigstens 2,5 cm, vorzugsweise wenigstens 2 cm, insbesondere wenigstens 1,5 cm, und/oder höchstens 8 cm, vorzugsweise höchstens 6 cm, insbesondere höchstens 4 cm, aufweisen. Unabhängig von der Größe der Durchlassöffnungen kann es sich positiv auf eine gleichmäßige Durchströmung des Filtermoduls auswirken, wenn die Durchlassöffnungen wenigstens im Wesentlichen über die gesamte Stützschicht verteilt angeordnet sind.

Hinsichtlich der Stützschicht kann es sich alternativ oder zusätzlich auch anbieten, wenn die wenigstens eine Stützschicht wenigstens im Wesentlichen aus Metall oder Kunststoff gebildet ist. Diese Materialien sind in Biofiltern meist recht beständig, wobei sich Stützschichten aus Metall recht einfach fertigen lassen, was die Herstellungskosten des Biofilters senkt. Zur Verminderung von Korrosion und Verlängerung der Standzeit kann sich Edelstahl, ein kunststoffbeschichteter Stahlwerkstoff und/oder ein verzinkter Stahlwerkstoff für die Stützschicht anbieten. Im Vergleich zu Metallwerkstoffen bieten Kunststoffe den Vorteil, dass sie in Biofiltern sehr langlebig eingesetzt werden können und kostengünstiger als Edelstahl sind. Dies gilt insbesondere für Polyethylen und/oder Polypropylen.

Unabhängig von dem Material der wenigstens einen Stützschicht kann diese einfach und zweckmäßig durch wenigstens ein Gitter, wenigstens ein Lochgitter, wenigstens ein Netz und/oder wenigstens ein Gewebe gebildet sein. Dabei bieten Gitter und Lochgitter, die typischerweise wenigstens im Wesentlichen biegesteif sind, den Vorteil einer hohen Stabilität. Netze und Gewebe, die typischerweise wenigstens im Wesentlichen biegeschlaff sind, können dagegen einfacher und kostengünstiger gefertigt werden.

Die wenigstens eine Gitterstruktur kann eine Schichtdicke von wenigstens 20 cm aufweisen. Dies kann zu einer hohen Stabilität der Gitterstruktur beitragen. Daher kann es umso mehr bevorzugt sein, wenn die Schichtdicke der Gitterstruktur wenigstens 30 cm, insbesondere wenigstens 40 cm, beträgt. Um eine kompakte Bauform zu erhalten und das Eigengewicht der Gitterstruktur zu begrenzen, weist die wenigstens eine Gitterstruktur in diesem Fall eine Schichtdicke von höchstens 100 cm auf.

Eine besonders kompakte Bauweise wird dabei ermöglicht, wenn die Schichtdicke der Gitterstruktur höchstens 80 cm, insbesondere höchstens 60 cm, beträgt. Ganz grundsätzlich kann dabei unter der Schichtdicke der Gitterstruktur insbesondere die Erstreckung der Gitterstruktur in vertikaler Richtung verstanden werden.

Hinsichtlich eines zufriedenstellenden Abscheidegrads und einer hinreichenden Verweilzeit bietet es sich an, wenn die wenigstens eine Filterschicht eine Schichtdicke von wenigstens 30 cm aufweist. Dies gilt insbesondere, wenn die Schichtdicke der Filterschicht wenigstens 40 cm, insbesondere wenigstens 50 cm, beträgt. Zu einer kompakten Ausgestaltung des Filtermoduls trägt in diesem Fall bei, wenn die wenigstens eine Filterschicht eine Schichtdicke von höchstens 150 cm aufweist. Aus demselben Grund kann es besonders bevorzugt sein, wenn die Schichtdicke der Filterschicht höchstens 125 cm, insbesondere höchstens 100 cm, beträgt. Dabei kann mit der Schichtdicke der Filterschicht ganz grundsätzlich insbesondere die Erstreckung der Filterschicht in vertikaler Richtung gemeint sein.

Unabhängig von der Schichtdicke der Gitterstruktur und der Filterschicht kann die wenigstens eine Stützschicht eine Schichtdicke von höchstens 5 cm aufweisen. Auch dies trägt zu einer kompakten Bauweise des Filtermoduls bei. Eine besonders kompakte Realisierung des Filtermoduls wird ermöglicht, wenn die Schichtdicke der Stützschicht höchstens 3 cm, insbesondere höchstens 1 cm, beträgt. Dabei wird unter der Schichtdicke der Stützschicht insbesondere deren Erstreckung in vertikaler Richtung verstanden.

Eine gleichmäßige Anströmung der Filterschicht kann begünstigt werden, wenn unterhalb der wenigstens einen Gitterstruktur eine Anströmkammer vorgesehen ist. Dabei kann die Anströmung besonders gleichmäßig erfolgen, wenn die wenigstens eine Anströmkammer eine Höhe von wenigstens 20 cm, vorzugsweise wenigstens 30 cm, insbesondere wenigstens 40 cm aufweist. Um die Biofilter kompakt und doch funktional ausbilden zu können, beträgt die Höhe der Anströmkammer in diesem Fall höchstens 120 cm, vorzugsweise höchstens 100 cm, insbesondere höchstens 80 cm.

Um eine hohe Effizienz der Biofilters bereitzustellen, können in dem wenigstens einen Filtermodul wenigstens zwei, vorzugsweise wenigstens drei, Filterschichten vorgesehen sein. Der Einfachheit halber sind diese übereinander angeordnet, so dass die Filterschichten vom Abgasstrom seriell durchströmt und/oder jeweils von einer Gitterstruktur getragen werden können. Dabei bietet es sich aus den genannten Gründen zudem an, wenn zwischen den Filterschichten und den Gitterstrukturen jeweils wenigstens eine Stützschicht vorgesehen ist. Zudem ist es besonders zweckmäßig, wenn sich die Strömung des Abgases zwischen den Filterschichten vergleichmäßigen kann, so dass es zweckmäßig ist, wenn unter jeder Gitterstruktur eine separate Anströmkammer vorgesehen ist.

Zum Tragen der wenigstens einen Gitterstruktur kann der Einfachheit halber ein Traggerüst vorgesehen sein. Dann kann das Traggerüst wenigstens abschnittsweise in der Anströmkammer angeordnet sein. Dies kann zu einer einfachen Konstruktion des Traggerüsts beitragen. Aus demselben Grund kann es alternativ oder zusätzlich vorteilhaft sein, wenn das Traggerüst wenigstens im Wesentlichen die gesamte Gewichtskraft der wenigstens einen Gitterstruktur und der wenigstens einen Filterschicht auf dem Boden des Filtermoduls abstützt. Unabhängig davon kann vorgesehen sein, dass wenigstens ein Teil der Gitterelemente der wenigstens einen Gitterstruktur auf dem Traggerüst aufliegen. So wird nicht nur eine besonders einfache Bauweise, sondern auch ein besonders kompakter Aufbau des Filtermoduls ermöglicht. Letzteres gilt umso mehr, wenn die auf dem Traggerüst aufliegenden Gitterelemente lose auf dem Traggerüst aufliegen. Dann kann nämlich auf eine separate Befestigung der entsprechenden Gitterelemente an dem Traggerüst verzichtet werden.

Sofern wenigstens eine untere Gitterstruktur und wenigstens eine oberhalb der unteren Gitterstruktur angeordnete obere Gitterstruktur des wenigstens einen Filtermoduls vorgesehen sind, kann es zweckmäßig sein, wenn das Traggerüst sowohl die wenigstens eine obere Gitterstruktur als auch die wenigstens eine untere Gitterstruktur trägt. Dann kann es sich weiter anbieten, wenn sich das Traggerüst durch die von der unteren Gitterstruktur getragene Filterschicht und wenigstens im Wesentlichen durch die unterhalb der oberen Gitterstruktur angeordnete Anströmkammer hindurch erstreckt. So kann das Traggerüst auf konstruktiv einfache Weise das Gewicht der oberen Gitterstruktur und der durch diese getragene Filterschicht tragen. Dabei kann die Konstruktion des Traggerüsts weiter vereinfacht werden, wenn sich das Traggerüst wenigstens im Wesentlichen in vertikaler Richtung durch die von der unteren Gitterstruktur getragene Filterschicht und die unterhalb der oberen Gitterstruktur angeordnete Anströmkammer hindurch erstreckt. Der Aufbau des Filtermoduls kann analog auch bei mehr als zwei übereinander angeordneten Filterschichten vorgesehen sein. Die Filterschichten werden dann bedarfsweise von einem einzigen Traggerüst getragen, wobei sich das Traggerüst durch alle Anströmkammern, alle Gitterstrukturen bis auf die oberste Gitterstruktur und alle Filterschichten bis auf die oberste Filterschicht hindurch streckt.

Eine stabile und zudem beständige Ausgestaltung des Traggerüsts kann erreicht werden, wenn das Traggerüst wenigstens im Wesentlichen aus einem Stahlwerkstoff gebildet ist. Dabei kann es sich insbesondere um einen verzinkten Stahlwerkstoff, einen Edelstahlwerkstoff und/oder einen kunststoffbeschichteten Stahlwerkstoff handeln. Alternativ oder zusätzlich kann das Traggerüst wenigstens im Wesentlichen aus einem Kunststoff gebildet sein. Kunststoffe sind leicht, günstig und sehr beständig. Aus diesen Gründen bietet sich beispielsweise Polyethylen und/oder Polypropylen als Werkstoff für das Traggerüst an. Alternativ kann das Traggerüst auch wenigstens im Wesentlichen aus einem Holzwerkstoff gebildet sein. Holzwerkstoffe sind nicht nur kostengünstig, sondern auch beständig gegenüber Korrosion. Allerdings kommt es bei Holzwerkstoffen mit der Zeit zu einer Zersetzung durch die im Biofilter angesiedelten Mikroorganismen. Vor diesem Hintergrund eignet sich insbesondere Vollholz, und zwar insbesondere Nadelhölzer wie Tannenholz und/oder Fichtenholz.

Unabhängig von dem für das Traggerüst verwendeten Werkstoff kann das Traggerüst als Rohrgestell ausgebildet sein. So kann auf einfache Weise ein verhältnismäßig leichtes und dennoch stabiles Traggerüst realisiert werden. Dabei kann das Rohrgestell in einfacher Weise wenigstens im Wesentlichen aus untereinander verbundenen Tragrohren gebildet sein.

Um jederzeit eine ausreichende Filtermaterialfeuchte sicherstellen zu können, kann der wenigstens einen Filterschicht wenigstens eine Befeuchtungseinrichtung zum Befeuchten der Filterschicht zugeordnet sein. Sofern mehrere Filterschichten vorgesehen sind, kann es sich zur Sicherstellung einer ausreichenden Filtermaterialfeuchte in jeder der Filterschichten anbieten, wenn den Filterschichten jeweils eine entsprechende Befeuchtungseinrichtung zugeordnet ist. Unabhängig davon, ob eine oder mehrere Befeuchtungseinrichtungen vorgesehen sind, kann die wenigstens eine Befeuchtungseinrichtung in einfacher Weise wenigstens eine Düse aufweisen. Dann kann die wenigstens eine Düse dazu ausgebildet sein, ein Wasser enthaltendes Befeuchtungsfluid auf die der Düse zugeordnete Filterschicht aufzubringen. Neben Wasser kann das Befeuchtungsfluid dabei insbesondere Nährstoffe für die in der Filterschicht angesiedelten Mikroorganismen enthalten. In den meisten Fällen wird dies aber nicht erforderlich sein. Unabhängig davon kann die wenigstens eine Befeuchtungseinrichtung, insbesondere die wenigstens eine Düse der wenigstens einen Befeuchtungseinrichtung, der Einfachheit halber oberhalb der der Befeuchtungseinrichtung zugeordneten Filterschicht angeordnet sein.

Für den Fall, dass das Filtermodul wenigstens eine untere Filterschicht und wenigstens eine oberhalb der unteren Filterschicht angeordnete obere Filterschicht aufweist, kann es sich anbieten, wenn sich die wenigstens eine Zuleitung der Befeuchtungseinrichtung, die der unteren Filterschicht zugeordnet ist, die also insbesondere zum Befeuchten der unteren Filterschicht ausgebildet ist, wenigstens teilweise durch die obere Filterschicht hindurch erstreckt. Dann kann die Zuleitung der der unteren Filterschicht zugeordneten Befeuchtungseinrichtung in einfacher Weise an die Zuleitung der der oberen Filterschicht zugeordneten Befeuchtungseinrichtung angeschlossen sein. So muss die Zuleitung der unteren Befeuchtungseinrichtung nicht separat in das Filtermodul eingeführt und im Biofilter montiert werden, was sich positiv auf eine einfache konstruktive Ausgestaltung des Filtermoduls auswirken kann. Vor diesem Hintergrund kann es besonders bevorzugt sein, wenn sich die wenigstens eine Zuleitung der unteren Befeuchtungseinrichtung wenigstens im Wesentlichen durch die obere Filterschicht hindurch erstreckt. Alternativ oder zusätzlich kann es sich der Einfachheit halber anbieten, wenn sich die wenigstens eine Zuleitung der der unteren Filterschicht zugeordneten Befeuchtungseinrichtung auch wenigstens im Wesentlichen durch die die obere Filterschicht tragende Gitterstruktur erstreckt.

Für den Fall, dass die der unteren Filterschicht zugeordnete Befeuchtungseinrichtung mehrere Düsen aufweist, kann auch die untere Befeuchtungseinrichtung mehrere Zuleitungen aufweisen, die sich jeweils wenigstens im Wesentlichen durch die obere Filterschicht und/oder die obere Gitterstruktur erstrecken. Dann kann jeder Düse eine, insbesondere separate, Zuleitung zugeordnet sein.

Hinsichtlich der wenigstens einen Zuleitung der der unteren Filterschicht zugeordneten Befeuchtungseinrichtung kann es sich alternativ oder zusätzlich auch anbieten, wenn die wenigstens eine Düse der unteren Befeuchtungseinrichtung an der Zuleitung gehalten und/oder in einer Anströmkammer zwischen der unteren Filterschicht und der oberen Filterschicht vorgesehen ist. So kann die Düse auf einfache und kostengünstige Weise in der vorgesehenen Position hängend gehalten sein. Sofern die untere Befeuchtungseinrichtung mehrere Düsen aufweist, kann es sich aus demselben Grund besonders anbieten, wenn die Düsen jeweils an einer, insbesondere separaten, Zuleitung entsprechend gehalten sind.

Alternativ oder zusätzlich kann es sich anbieten, wenn die wenigstens eine Zuleitung der der unteren Filterschicht zugeordneten Befeuchtungseinrichtung wenigstens abschnittsweise in wenigstens einem Leitungsschacht angeordnet ist, der sich wenigstens im Wesentlichen durch die obere Filterschicht erstreckt. So kann nicht nur der für den Aufbau des Filtermoduls erforderliche Aufwand, sondern auch der für das Nachfüllen und Austauschen des Filtermaterials der oberen Filterschicht erforderliche Aufwand reduziert werden. Aus demselben Grund kann es für den Fall, dass die der unteren Filterschicht zugeordnete Befeuchtungseinrichtung mehrere Zuleitungen aufweist, vorteilhaft sein, wenn die Zuleitungen jeweils abschnittsweise in einem, insbesondere separaten, Leitungsschacht angeordnet sind. Unabhängig davon kann der wenigstens eine Leitungsschacht konstruktiv einfach und kostengünstig durch ein Rohr und/oder einen Schlauch gebildet sein. Alternativ oder zusätzlich kann der wenigstens eine Leitungsschacht einfach und zweckmäßig an wenigstens einem der Gitterelemente der die obere Filterschicht tragenden Gitterstruktur befestigt sein.

Unabhängig davon, ob der Leitungsschacht durch ein Rohr und/oder einen Schlauch gebildet ist und wie der Leitungsschacht befestigt ist, kann es sich anbieten, wenn der wenigstens eine Leitungsschacht und die wenigstens eine Düse der der unteren Filterschicht zugeordneten Befeuchtungseinrichtung so ausgebildet sind, dass die Düse durch den Leitungsschacht hindurchgeführt werden kann. Dies kann nicht nur eine einfache Installation der Düse ermöglichen, sondern auch die Wartung des Filtermoduls vereinfachen. Dann kann die Düse nämlich insbesondere einfach von oben durch den Leitungsschacht in die für die Düse vorgesehene Position gebracht werden und, etwa bei einem Defekt der Düse, durch den Leitungsschacht, insbesondere aus der unterhalb der oberen Gitterstruktur angeordneten Anströmkammer, herausgezogen werden.

Zuvor wurde insbesondere der Aufbau eines Filtermoduls mit einer oberen Filterschicht und einer unteren Filterschicht im Zusammenhang mit einer Befeuchtungseinrichtung beschrieben. Grundsätzlich ist ein analoger Aufbau des Filtermoduls auch für drei oder mehr Filterschichten denkbar. Dann ist über jeder Filterschicht wenigstens eine Düse angeordnet, deren Zuleitung durch die darüber vorgesehenen Filterschichten hindurchgeführt sind, und zwar bedarfsweise durch entsprechende Rohre und/oder Schläuche.

Um den Aufwand zur Befeuchtung der Filterschicht zu vereinfachen, kann eine Steuereinrichtung vorgesehen sein, die zum Steuern der wenigstens einen Befeuchtungseinrichtung ausgebildet ist. Dabei kann das Steuern der wenigstens einen Befeuchtungseinrichtung insbesondere in Abhängigkeit wenigstens eines Feuchtemesswerts erfolgen, der von wenigstens einem Feuchtesensor gemessen wird. Die Feuchtemessung kann beispielsweise mittels wenigstens eines Mikrowellensensors gemessen werden. So kann nicht nur zuverlässig verhindert werden, dass es zum Austrocknen des Filtermaterials kommt, sondern auch, dass das Filtermaterial zu stark befeuchtet wird und es zu Staunässe in dem Filtermaterial kommt, was sich negativ auf die gleichmäßige Durchströmung der Filterschicht auswirkt. Dabei kann es sich der Einfachheit halber anbieten, wenn der wenigstens eine Feuchtesensor zum Messen der Filtermaterialfeuchte der wenigstens einen Filterschicht ausgebildet ist.

Unabhängig davon, ob der Biofilter eine Befeuchtungseinrichtung aufweist oder nicht, kann es sich anbieten, wenn das wenigstens eine Filtermodul nach oben offen ausgebildet ist. So kann auf einfache Weise der von oben auf das Filtermodul treffende Niederschlag zur Befeuchtung des Filtermaterials genutzt und so der Aufwand zum Befeuchten des Filtermaterials reduziert werden. Dabei kann es grundsätzlich ausreichend sein, wenn das Filtermodul nur über einen Teilbereich der horizontalen Erstreckung der wenigstens einen Filterschicht nach oben offen ausgebildet ist. Hinsichtlich eines gleichmäßigen Feuchteeintrags in das Filtermaterial durch Niederschlag bietet es sich jedoch besonders an, wenn das Filtermodul wenigstens im Wesentlichen über die gesamte horizontale Erstreckung der wenigstens einen Filterschicht nach oben offen ausgebildet ist.

Nachfolgend wird die Erfindung anhand einer lediglich ein Ausführungsbeispiel darstellenden Zeichnung näher erläutert. In der Zeichnung zeigt
- Fig. 1: einen erfindungsgemäßen Biofilter in einer schematischen vertikalen Schnittansicht,
- Fig. 2: ein Detail des Biofilters aus Fig. 1 in einer schematischen vertikalen Schnittansicht und
- Fig. 3: ein Detail des Biofilters aus Fig. 1 in einer schematischen horizontalen Schnittansicht von oben.

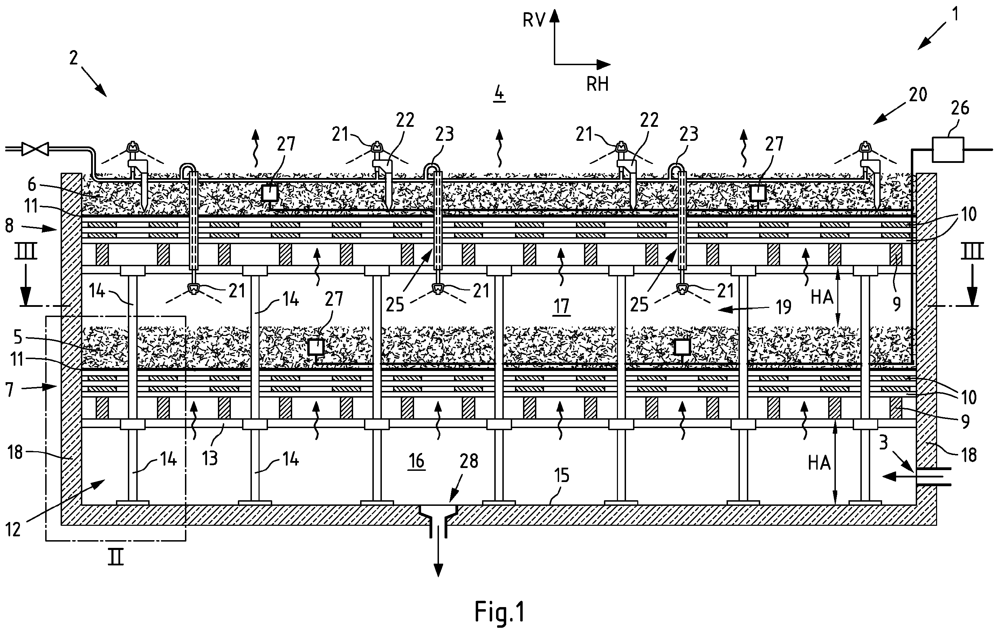

In Fig. 1 ist ein Biofilter 1 in einer schematischen vertikalen Schnittansicht dargestellt. Der Biofilter 1 dient der biologischen Reinigung eines Abgasstroms, der biologisch abbaubare Störstoffe, wie Geruchstoffe und/oder Schadstoffe, aufweist. Der Biofilter 1 weist im dargestellten und insoweit bevorzugten Ausführungsbeispiel ein Filtermodul 2 auf. Über eine Einströmöffnung 3 wird dem Filtermodul 2 der verunreinigte Abgasstrom zugeführt, der sodann das Filtermodul 2 wenigstens im Wesentlichen in vertikaler Richtung RV nach oben durchströmt und schließlich als gereinigter Abgasstrom aus dem nach oben offenen Filtermodul 2 in die Umgebung 4 abgeführt wird. Alternativ könnte das Filtermodul 2 auch so ausgebildet sein, dass der Abgasstrom das Filtermodul 2 von oben nach unten durchströmt. Bevorzugt ist dies jedoch nicht.

Das Filtermodul 2 weist vorliegend eine untere Filterschicht 5 und eine obere Filterschicht 6 auf, die nacheinander von dem Abgasstrom durchströmt werden. Dabei sind die Filterschichten 5,6 als Schüttschichten ausgebildet. Als Filtermaterial weisen die Filterschichten 5,6 vorliegend Holzhackschnitzel aus einem Nadelholz auf. Die Filterschichten 5,6 werden jeweils durch eine sich wenigstens im Wesentlichen in horizontaler Richtung RH erstreckende Gitterstruktur 7,8 getragen. Dabei sind die Gitterstrukturen 7,8 jeweils durch über Kreuz angeordnete längliche Gitterelemente 9,10 gebildet, die vorliegend lose aufeinander aufliegen. Im dargestellten und insoweit bevorzugten Ausführungsbeispiel sind jeweils die untersten Gitterelemente 9 der beiden Gitterstrukturen 7,8 als Holzbalken und die darüber angeordneten übrigen Gitterelemente 10 als Holzlatten ausgebildet. Zwischen der unteren Gitterstruktur 7 und der unteren Filterschicht 5 sowie zwischen der oberen Gitterstruktur 8 und der oberen Filterschicht 6 ist jeweils eine Stützschicht 11 in Form eines Kunststoffnetzes angeordnet. Über die Stützschichten 11 sind die Filterschichten 5,6 jeweils auf der die jeweilige Filterschicht 5,6 tragenden Gitterstruktur 7,8 abgestützt. Bei alternativen Biofiltern können auf diese Weise auch beispielsweise drei oder vier Filterschichten jeweils getragen von einer Gitterstruktur übereinander vorgesehen sein.

Die Gitterstrukturen 7,8 sind durch ein Traggerüst 12 getragen. Das Traggerüst 12 ist vorliegend als Rohrgestell ausgebildet, das sich im Wesentlichen aus horizontalen und vertikalen Tragrohren 13,14 zusammensetzt, die vorliegend aus einem verzinkten Stahlwerkstoff gebildet sind. Dabei liegen jeweils die untersten Gitterelemente 9 der beiden Gitterstrukturen 7,8 lose auf den horizontalen Tragrohren 13 des Traggerüsts 12 auf. Die horizontalen Tragrohre 13 sind wiederum auf den vertikalen Tragrohren 14 des Traggerüsts 12 abgestützt. Dabei erstrecken sich die die obere Gitterstruktur 8 abstützenden vertikalen Tragrohre 14 durch die untere Filterschicht 5 und die untere Gitterstruktur 7 hindurch. Auf diese Weise stützt das Traggerüst 12 im Wesentlichen die gesamte Gewichtskraft beider Gitterstrukturen 7,8 und beider Filterschichten 5,6 auf dem Boden 15 des Filtermoduls 2 ab.

Unterhalb der Gitterstrukturen 7,8 ist jeweils eine Anströmkammer 16,17 angeordnet. Dabei ist die untere Anströmkammer 16 in vertikaler Richtung RV nach unten im Wesentlichen durch den Boden 15 des Filtermoduls 2 und in vertikaler Richtung RV nach oben durch die untere Gitterstruktur 7 begrenzt. Die obere Anströmkammer 17 ist nach unten durch die untere Filterschicht 5 und nach oben durch die obere Gitterstruktur 8 begrenzt. Zu den Seiten sind beide Anströmkammern 16,17 im Wesentlichen durch die Seitenwände 18 des Filtermoduls 2 begrenzt. Dabei weist die untere Anströmkammer 16 vorliegend eine Höhe HA von 70 cm und die obere Anströmkammer 17 eine Höhe HA von 50 cm auf.

Zur Befeuchtung des Filtermaterials der Filterschichten 5,6 weist der Biofilter 1 vorliegend eine untere und eine obere Befeuchtungseinrichtung 19,20 auf, wobei die untere Befeuchtungseinrichtung 19 der unteren Filterschicht 5 und die obere Befeuchtungseinrichtung 20 der oberen Filterschicht 6 zugeordnet ist. Dabei weisen die Befeuchtungseinrichtungen 19,20 jeweils mehrere Düsen 21 auf, mit denen ein Befeuchtungsfluid auf die Filterschichten 5,6 aufgebracht werden kann. Die Düsen 21 der oberen Befeuchtungseinrichtung 20 sind von Halteelementen 22 gehalten, die jeweils in die obere Filterschicht 6 eingesteckt sind. Die Düsen 21 der unteren Befeuchtungseinrichtung 19 sind dagegen hängend an Zuleitungen 23 der unteren Befeuchtungseinrichtung 19 gehalten, die vorliegend als flexible Schläuche ausgebildet sind. Dabei erstrecken sich die Zuleitungen 23 der unteren Befeuchtungseinrichtung 19 in vertikaler Richtung RV durch die obere Gitterstruktur 8 sowie die obere Filterschicht 6 hindurch. In der Nähe der Oberfläche der oberen Filterschicht 6 sind die Zuleitungen 23 der unteren Befeuchtungseinrichtung 19 an die Zuleitungen 24 der Düsen 21 der oberen Befeuchtungseinrichtung 20 angeschlossen, welche beim dargestellten Ausführungsbeispiel aber keinesfalls zwingend kurz unter der Oberfläche der oberen Filterschicht 6 verlaufen.

Die Abschnitte der Zuleitungen 23 der unteren Befeuchtungseinrichtung 19, die sich durch die obere Filterschicht 6 und die obere Gitterstruktur 8 hindurch erstrecken, sind in Leitungsschächten 25 angeordnet, die sich vorliegend ebenfalls sowohl durch die obere Filterschicht 6 als auch durch die obere Gitterstruktur 8 hindurch erstrecken. Dabei sind die Leitungsschächte 25 in einfacher Weise als wenigstens im Wesentlichen starre Rohre ausgebildet, die in nicht dargestellter Weise an wenigstens einem der Gitterelemente 9,10 der oberen Gitterstruktur 8 befestigt sind. Aus Darstellungsgründen sind die Düsen 21 der unteren Befeuchtungseinrichtung 19 in der Fig. 1 größer dargestellt als die Durchmesser der die Leitungsschächte 25 bildenden Rohre. Tatsächlich sind die Düsen 21 der unteren Befeuchtungseinrichtungen 19 jedoch kleiner als die Querschnitte der Leitungsschächte 25 ausgebildet, so dass die Düsen 21 in einfacher Weise von oben durch die Leitungsschächte 25 in die obere Anströmkammer 17 eingeführt und auch wieder herausgezogen werden können.

Die Düsen 21 der Befeuchtungseinrichtungen 19,20 werden von einer Steuereinrichtung 26 des Biofilters 1 gesteuert. Dabei ist die Steuereinrichtung 26 mit mehreren Feuchtesensoren 27 verbunden, die in den Filterschichten 5,6 angeordnet sind. Die Feuchtesensoren 27 messen die Filtermaterialfeuchte in den Filterschichten 5,6. So kann die Steuereinrichtung 26 die Düsen 21 in Abhängigkeit der von den Feuchtesensoren 27 gemessenen Feuchtemesswerte steuern. Auf diese Weise kann die Befeuchtung des Filtermaterials durch die Befeuchtungseinrichtungen 19,20 nicht nur an sich verändernde Prozessparameter, sondern auch an zeitweise auftretende Niederschläge angepasst werden, die auf das nach oben offene Filtermodul 2 treffen und so zur Befeuchtung des Filtermaterials beitragen. Dabei wird durch einen am Boden 15 des Filtermoduls 2 angeordneten Abfluss 28 sichergestellt, dass sich im Bereich des Bodens 15 kein überschüssiges Wasser ansammelt, das bei einer Übernässung des Filtermaterials, etwa aufgrund von starkem Niederschlag, anfallen kann.

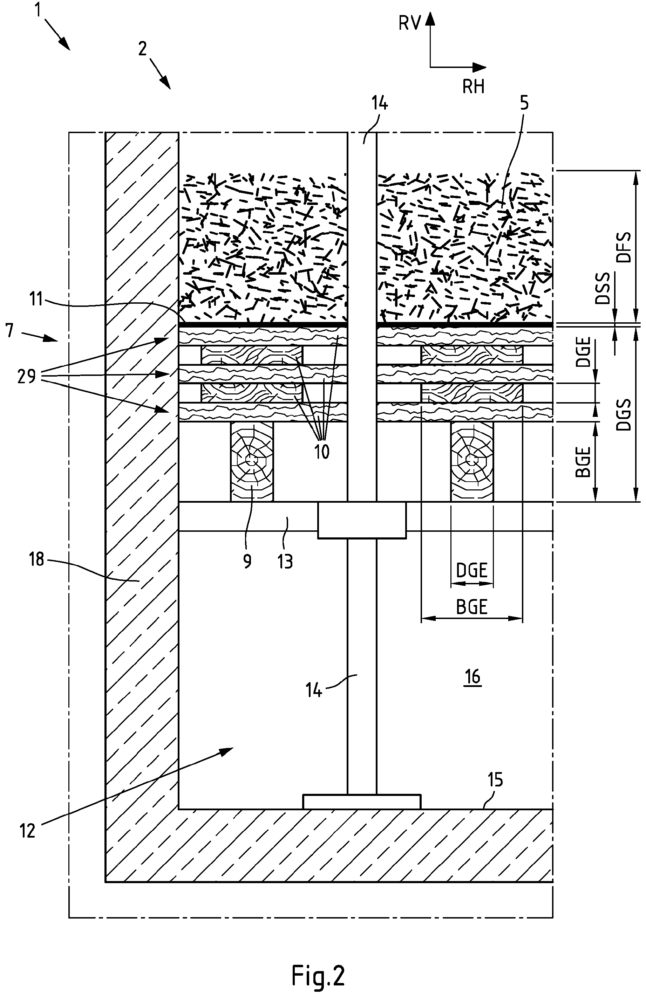

In Fig. 2 ist ein Detail des Biofilters 1 gemäß dem in der Fig. 1 dargestellten Ausschnitt II in einer schematischen vertikalen Schnittansicht dargestellt. Die Gitterelemente 9,10 der unteren Gitterstruktur 7 liegen über Kreuz aufeinander und sind ansonsten untereinander unverbunden. Die untersten Gitterelemente 9 sind als Balken ausgebildet, während die übrigen Gitterelemente 10 als Latten, Bretter oder Bohlen ausgebildet sind. Die untersten Gitterelemente 9 müssten daher nicht als Teil der Gitterstrukturen 7,8 angesehen werden, sondern könnten auch als Teil des Traggerüsts 12 verstanden werden. Jedenfalls sind bei dem dargestellten Ausführungsbeispiel eines Biofilters 1 mehrere, genauer gesagt drei, Gitterlagen 29 aus über Kreuz vorgesehenen Gitterelementen 9,10 vorgesehen. Sowohl die Gitterlagen als auch die Gitterstrukturen und die Gitterelemente erstrecken sich dabei wenigstens im Wesentlichen in einer horizontalen Richtung.

Im dargestellten und insoweit bevorzugten Biofilter 1 weist die untere Filterschicht 5 eine Schichtdicke DFS von ca. 70 cm und die untere Gitterstruktur 7 eine Schichtdicke DGS von ca. 80 cm auf. Die zwischen der unteren Gitterstruktur 7 und der unteren Filterschicht 5 angeordnete Stützschicht 11 weist eine Schichtdicke DSS von unter 1 cm auf. Die als Balken ausgebildeten untersten Gitterelemente 9 der unteren Gitterstruktur 7 weisen vorliegend eine Dicke DGE von 8 cm und eine Breite BGE von 15 cm auf. Die übrigen, als Latten ausgebildeten Gitterelemente 10 der unteren Gitterstruktur 7 weisen dagegen eine Dicke DGE von 3 cm und eine Breite von BGE von 18 cm auf.

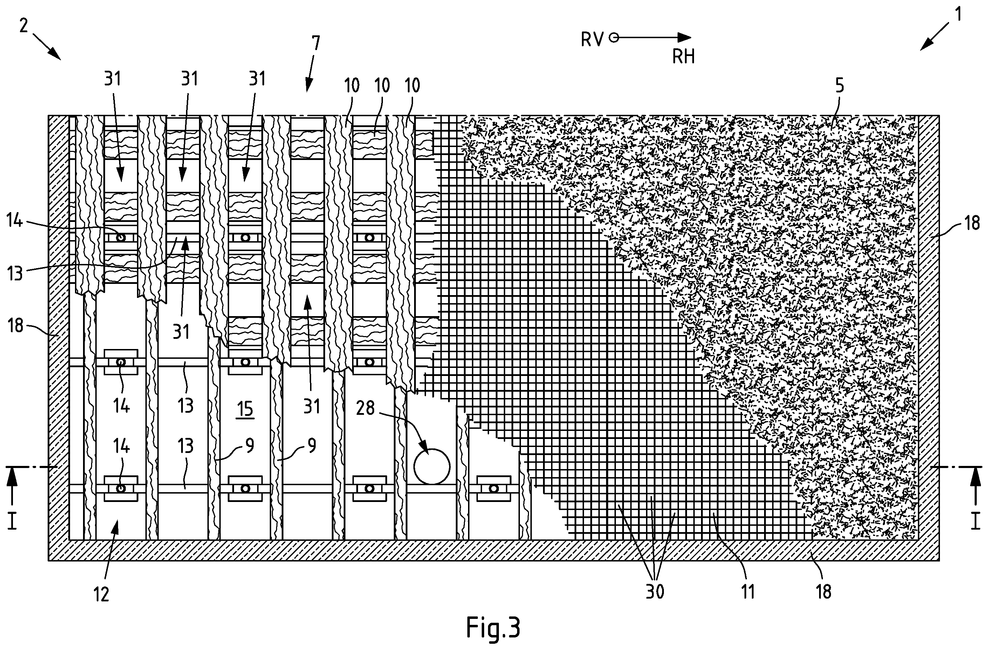

In Fig. 3 ist ein Detail des Biofilters 1 in einer schematischen horizontalen Schnittansicht entlang der in der Fig. 1 dargestellten Schnittebene III-III dargestellt, wobei abschnittsweise die untere Filterschicht 5, die untere Stützschicht 11 und/oder Gitterelemente 9,10 der unteren Gitterstruktur 7 nicht dargestellt sind. Die Netze, die die zwischen den Filterschichten 5,6 und den Gitterstrukturen 7,8 angeordneten Stützschichten 11 bilden, weisen jeweils eine Vielzahl von Durchlassöffnungen 30 auf. Dabei sind die Durchlassöffnungen 30 so ausgebildet, dass zwar feine, etwa durch die in dem Filtermodul 2 vorhandenen Mikroorganismen zersetzte, Bestandteile des Filtermaterials der Filterschichten 5,6 durch die Durchlassöffnungen 30 hindurch fallen können, größere, unverrottete Bestandteile des Filtermaterials jedoch nicht. Vor diesem Hintergrund weisen die die Stützschichten 11 bildenden Netze im dargestellten und insoweit bevorzugten Ausführungsbeispiel eine Maschenweite von ca. 3 cm auf.

Die Gitterelemente 9,10 der Gitterstrukturen 7,8 sind im dargestellten und insoweit bevorzugten Ausführungsbeispiel so angeordnet, dass sie sich wenigstens im Wesentlichen rechtwinklig kreuzen. Dabei sind innerhalb der Gitterstrukturen 7,8 in vertikaler Richtung RV gesehen eine Vielzahl von Gitteröffnungen 31 vorgesehen, die beim dargestellten und insoweit bevorzugten Biofilter 1 jeweils durch zwei sich kreuzende Paare paralleler Gitterelemente 9,10 begrenzt sind und wenigstens im Wesentlichen deckungsgleich zu jeder der drei übereinander vorgesehenen Gitterlagen 29 angeordnet sind.

### Bezugszeichenliste

- 1: Biofilter
- 2: Filtermodul
- 3: Einströmöffnung
- 4: Umgebung
- 5,6: Filterschicht
- 7,8: Gitterstruktur
- 9,10: Gitterelement
- 11: Stützschicht
- 12: Traggerüst
- 13,14: Tragrohr
- 15: Boden
- 16,17: Anströmkammer
- 18: Seitenwand
- 19,20: Befeuchtungseinrichtung
- 21: Düse

- 22: Halteelement
- 23,24: Zuleitung
- 25: Leitungsschacht
- 26: Steuereinrichtung
- 27: Feuchtesensor
- 28: Abfluss
- 29: Gitterlage
- 30: Durchlassöffnung
- 31: Gitteröffnung

- BGE: Breite des Gitterelements
- DFS: Schichtdicke der Filterschicht
- DGE: Dicke des Gitterelements
- DGS: Schichtdicke der Gitterstruktur
- DSS: Schichtdicke der Stützschicht
- HA: Höhe der Anströmkammer
- RH: horizontale Richtung
- RV: vertikale Richtung

## Patentansprüche

1. Biofilter (1) zur biologischen Reinigung eines Störstoffe aufweisenden Abgasstroms, mit wenigstens einem von dem Abgasstrom zu durchströmenden Filtermodul (2), wobei das Filtermodul (2) wenigstens eine ein organisches Filtermaterial aufweisende Filterschicht (5,6) aufweist und wobei die wenigstens eine Filterschicht (5,6) von wenigstens einer wenigstens im Wesentlichen horizontal ausgerichteten Gitterstruktur (7,8) getragen ist,
**dadurch gekennzeichnet, dass**
die wenigstens eine Gitterstruktur (7,8) durch wenigstens im Wesentlichen rechtwinklig über Kreuz und aufeinander angeordnete längliche, wenigstens im Wesentlichen horizontal ausgerichtete und untereinander wenigstens im Wesentlichen unverbundene Gitterelemente (10) in Form von Holzlatten und Holzbalken gebildet ist.

2. Biofilter nach Anspruch 1,
**dadurch gekennzeichnet, dass**
die wenigstens eine Gitterstruktur (7,8) aus wenigstens zwei, vorzugsweise wenigstens drei, insbesondere wenigstens vier, aufeinander angeordneten und horizontal ausgerichteten, Gitterlagen (29) gebildet ist.

3. Biofilter nach einem der Ansprüche 1 oder 2,
**dadurch gekennzeichnet, dass**
die Gitterelemente (9,10) der wenigstens einen Gitterstruktur (7,8) und der Gitterlagen (29) einander wenigstens im Wesentlichen rechtwinklig kreuzen und/oder dass innerhalb der wenigstens einen Gitterstruktur (7,8) und der Gitterlagen (29) in vertikaler Richtung (RV) gesehen Gitteröffnungen (31) einer Breite und Länge von wenigstens 10 cm, vorzugsweise wenigstens 15 cm, insbesondere wenigstens 20 cm, und höchstens 120 cm, vorzugsweise höchstens 80 cm, insbesondere höchstens 60 cm, vorgesehen sind und/oder dass die Gitterelemente (10) wenigstens 20 Vol.-%, vorzugsweise wenigstens 30 Vol.-%, insbesondere wenigstens 35 Vol.-%, und höchstens 70 Vol.-%, vorzugsweise höchstens 60 Vol.-%, insbesondere höchstens 55 Vol.-%, des Volumens der wenigstens einen Gitterstruktur (7,8) einnehmen.

4. Biofilter nach einem der Ansprüche 1 bis 3,
**dadurch gekennzeichnet, dass**
die Gitterelemente (10) der wenigstens einen Gitterstruktur (7,8) jeweils eine Länge von wenigstens 80 cm, vorzugsweise wenigstens 120 cm, insbesondere wenigstens 160 cm, und höchstens 10 m, vorzugsweise höchstens 8 m, insbesondere höchstens 6 m, und/oder eine Dicke (DGE) von wenigstens 1 cm, vorzugsweise wenigstens 2 cm, insbesondere wenigstens 3 cm, und höchstens 15 cm, vorzugsweise höchstens 10 cm, insbesondere höchstens 5 cm, und/oder eine Breite (BGE) von wenigstens 5 cm, vorzugsweise wenigstens 10 cm, insbesondere wenigstens 15 cm, und höchstens 80 cm, vorzugsweise höchstens 60 cm, insbesondere höchstens 40 cm, aufweisen.

5. Biofilter nach einem der Ansprüche 1 bis 4,
**dadurch gekennzeichnet, dass**
die wenigstens eine Filterschicht (5,6) als Schüttschicht ausgebildet ist und/oder dass das Filtermaterial der wenigstens einen Filterschicht (5,6) Holzhackschnitzel, insbesondere Nadelholzhackschnitzel, Rindenmulch, Fasertorf, Kokosfasern, gerissenes Wurzelholz, Bioabfallkompost, Heidekraut, Holzwolle und/oder Holzpellets umfasst.

6. Biofilter nach einem der Ansprüche 1 bis 5,
**dadurch gekennzeichnet, dass**
zwischen der wenigstens einen Filterschicht (5,6) und der wenigstens einen Gitterstruktur (7,8) eine eine Vielzahl von Durchlassöffnungen (30) aufweisende Stützschicht (11) zum Stützen der Filterschicht (5,6) oberhalb der Gitterstruktur (7,8) vorgesehen ist und dass, vorzugsweise, die Stützschicht (11) wenigstens im Wesentlichen aus Metall oder Kunststoff, insbesondere Polyethylen oder Polypropylen, und/oder durch wenigstens ein Gitter, Lochgitter, Netz und/oder Gewebe gebildet ist.

7. Biofilter nach einem der Ansprüche 1 bis 6,
**dadurch gekennzeichnet, dass**
die wenigstens eine Gitterstruktur (7,8) eine Schichtdicke (DGS) von wenigstens 20 cm, vorzugsweise wenigstens 30 cm, insbesondere wenigstens 40 cm, und höchstens 100 cm, vorzugsweise höchstens 80 cm, insbesondere höchstens 60 cm, aufweist und/oder dass die wenigstens eine Filterschicht (5,6) eine Schichtdicke (DFS) von wenigstens 30 cm, vorzugsweise wenigstens 40 cm, insbesondere wenigstens 50 cm, und höchstens 150 cm, vorzugsweise höchstens 125 cm, insbesondere höchstens 100 cm, aufweist und/oder dass die wenigstens eine Stützschicht (11) eine Schichtdicke (DSS) von höchstens 5 cm, vorzugsweise höchstens 3 cm, insbesondere höchstens 1 cm, aufweist.

8. Biofilter nach einem der Ansprüche 1 bis 7,
**dadurch gekennzeichnet, dass**
unterhalb der wenigstens einen Gitterstruktur (7,8) eine Anströmkammer (16,17) für den Abgasstrom vorgesehen ist und, vorzugsweise, die wenigstens eine Anströmkammer (16,17) eine Höhe (HA) von wenigstens 20 cm, vorzugsweise wenigstens 30 cm, insbesondere wenigstens 40 cm, und höchstens 120 cm, vorzugsweise höchstens 100 cm, insbesondere höchstens 80 cm, aufweist und/oder dass das wenigstens eine Filtermodul wenigstens zwei, vorzugsweise wenigstens drei, jeweils von einer Gitterstruktur getragene Filterschichten aufweist und, vorzugsweise, zwischen den Filterschichten und den Gitterstrukturen jeweils eine Stützschicht und/oder unter jeder Gitterstruktur eine Anströmkammer vorgesehen ist.

9. Biofilter nach einem der Ansprüche 1 bis 8,
**dadurch gekennzeichnet, dass**
ein Traggerüst (12) zum Tragen der wenigstens Gitterstruktur(7,8), insbesondere wenigstens abschnittweise in der wenigstens einen Anströmkammer (16,17), vorgesehen ist und dass, vorzugsweise, das Traggerüst (12) wenigstens im Wesentlichen die gesamte Gewichtskraft der wenigstens einen Gitterstruktur (7,8) und der wenigstens einen Filterschicht (5,6) auf dem Boden (15) des Filtermoduls (2) abstützt und/oder das Traggerüst (12) wenigstens eine untere Gitterstruktur (7) und eine obere Gitterstruktur (8) trägt und sich durch die von der unteren Gitterstruktur (7) getragene Filterschicht (5) sowie wenigstens im Wesentlichen durch die unterhalb der oberen Gitterstruktur (8) angeordnete Anströmkammer (17) hindurch erstreckt.

10. Biofilter nach Anspruch 9,
**dadurch gekennzeichnet, dass**
das Traggerüst (12) wenigstens im Wesentlichen aus einem Stahlwerkstoff, insbesondere einem verzinkten Stahlwerkstoff, einem Edelstahlwerkstoff und/oder einem kunststoffbeschichteten Stahlwerkstoff, einem Kunststoff, insbesondere Polyethylen und/oder Polypropylen, aus Holz oder einem Holzwerkstoff, vorzugsweise aus Nadelholz, gebildet ist und/oder dass das Traggerüst (12) als Rohrgestell ausgebildet ist.

11. Biofilter nach einem der Ansprüche 1 bis 10,
**dadurch gekennzeichnet, dass**
der wenigstens einen Filterschicht (5,6) wenigstens eine Befeuchtungseinrichtung (19,20) zum Befeuchten der Filterschicht (5,6) zugeordnet ist und dass, vorzugsweise, die wenigstens eine Befeuchtungseinrichtung (19,20) wenigstens eine Düse (21) zum Aufbringen eines Wasser enthaltenden Befeuchtungsfluids auf die Filterschicht (5,6) aufweist.

12. Biofilter nach Anspruch 11**,**
**dadurch gekennzeichnet, dass**
das Filtermodul (2) wenigstens eine untere Filterschicht (5) und wenigstens eine obere Filterschicht (6) aufweist und dass sich wenigstens eine Zuleitung (23) der der unteren Filterschicht (5) zugeordneten Befeuchtungseinrichtung (19) wenigstens teilweise, insbesondere wenigstens im Wesentlichen in vertikaler Richtung (RV), durch die obere Filterschicht (6) hindurch erstreckt und dass, vorzugsweise, die wenigstens eine der unteren Filterschicht (5) zugeordnete Düse (21) an der wenigstens einen Zuleitung (23), insbesondere hängend, und/oder in der Anströmkammer der oberen Filterschicht gehalten ist.

13. Biofilter nach Anspruch 12,
**dadurch gekennzeichnet, dass**
die wenigstens eine Zuleitung (23) abschnittsweise in wenigstens einem sich wenigstens im Wesentlichen durch die obere Filterschicht (6) hindurch erstreckenden Leitungsschacht (25), insbesondere gebildet durch ein Rohr und/oder einen Schlauch, angeordnet ist und dass, vorzugsweise, die wenigstens eine der unteren Filterschicht (5) zugeordnete Düse (21) durch den wenigstens einen Leitungsschacht (25) durchgeführt ist.

14. Biofilter nach Anspruch 2 oder 13,
**dadurch gekennzeichnet, dass**
als Teil des Biofilters (1) eine Steuereinrichtung (26) zum Steuern der wenigstens einen Befeuchtungseinrichtung (19,20), insbesondere in Abhängigkeit wenigstens eines von wenigstens einem Feuchtesensor (27) als Teil des Biofilters (1) gemessenen Feuchtemesswerts, vorgesehen ist und, vorzugsweise, der wenigstens eine Feuchtesensor (27) zum Messen der Filtermaterialfeuchte der wenigstens einen Filterschicht (5,6) ausgebildet ist und/oder dass das wenigstens eine Filtermodul (2), insbesondere wenigstens im Wesentlichen über die gesamte horizontale Erstreckung der wenigstens einen Filterschicht (5,6), nach oben offen ausgebildet ist.

## Claims

1. Biofilter (1) for biological purification of an exhaust gas stream containing contaminants, with at least one filter module (2) to be flowed through by the exhaust gas stream, wherein the filter module (2) comprises at least one filter layer (5,6) comprising an organic filter material and wherein the at least one filter layer (5,6) is supported by at least one at least substantially horizontally oriented grid structure (7,8),
**characterized in that**
the at least one grid structure (7,8) is formed by elongated grid elements (10) arranged at least substantially at right angles crosswise and on top of one another, oriented at least substantially horizontally and at least substantially unconnected to one another, in the form of wooden slats and wooden beams.

2. Biofilter according to claim 1,
**characterized in that**
the at least one grid structure (7,8) is formed from at least two, preferably at least three, in particular at least four, grid layers (29) arranged on top of one another and oriented horizontally.

3. Biofilter according to one of claims 1 or 2,
**characterized in that**
the grid elements (9,10) of the at least one grid structure (7,8) and of the grid layers (29) cross one another at least substantially at right angles and/or that within the at least one grid structure (7,8) and the grid layers (29), viewed in vertical direction (RV), grid openings (31) of a width and length of at least 10 cm, preferably at least 15 cm, in particular at least 20 cm, and at most 120 cm, preferably at most 80 cm, in particular at most 60 cm, are provided and/or that the grid elements (10) occupy at least 20 % by volume, preferably at least 30 % by volume, in particular at least 35 % by volume, and at most 70 % by volume, preferably at most 60 % by volume, in particular at most 55 % by volume, of the volume of the at least one grid structure (7,8).

4. Biofilter according to one of claims 1 to 3,
**characterized in that**
the grid elements (10) of the at least one grid structure (7,8) each have a length of at least 80 cm, preferably at least 120 cm, in particular at least 160 cm, and at most 10 m, preferably at most 8 m, in particular at most 6 m, and/or a thickness (DGE) of at least 1 cm, preferably at least 2 cm, in particular at least 3 cm, and at most 15 cm, preferably at most 10 cm, in particular at most 5 cm, and/or a width (BGE) of at least 5 cm, preferably at least 10 cm, in particular at least 15 cm, and at most 80 cm, preferably at most 60 cm, in particular at most 40 cm.

5. Biofilter according to one of claims 1 to 4,
**characterized in that**
the at least one filter layer (5,6) is formed as a bulk layer and/or that the filter material of the at least one filter layer (5,6) comprises wood chips, in particular softwood chips, bark mulch, fibrous peat, coconut fibers, shredded root wood, biowaste compost, heather, wood wool and/or wood pellets.

6. Biofilter according to one of claims 1 to 5,
**characterized in that**
between the at least one filter layer (5,6) and the at least one grid structure (7,8) a support layer (11) having a plurality of passage openings (30) for supporting the filter layer (5,6) above the grid structure (7,8) is provided and that, preferably, the support layer (11) is formed at least substantially from metal or plastic, in particular polyethylene or polypropylene, and/or by at least one grid, perforated grid, mesh and/or fabric.

7. Biofilter according to one of claims 1 to 6,
**characterized in that**
the at least one grid structure (7,8) has a layer thickness (DGS) of at least 20 cm, preferably at least 30 cm, in particular at least 40 cm, and at most 100 cm, preferably at most 80 cm, in particular at most 60 cm, and/or that the at least one filter layer (5,6) has a layer thickness (DFS) of at least 30 cm, preferably at least 40 cm, in particular at least 50 cm, and at most 150 cm, preferably at most 125 cm, in particular at most 100 cm, and/or that the at least one support layer (11) has a layer thickness (DSS) of at most 5 cm, preferably at most 3 cm, in particular at most 1 cm.

8. Biofilter according to one of claims 1 to 7,
**characterized in that**
below the at least one grid structure (7,8) an inlet chamber (16,17) for the exhaust gas stream is provided and, preferably, the at least one inlet chamber (16,17) has a height (HA) of at least 20 cm, preferably at least 30 cm, in particular at least 40 cm, and at most 120 cm, preferably at most 100 cm, in particular at most 80 cm, and/or that the at least one filter module comprises at least two, preferably at least three, filter layers each supported by a grid structure and, preferably, between the filter layers and the grid structures a respective support layer and/or below each grid structure an inlet chamber is provided.

9. Biofilter according to one of claims 1 to 8,
**characterized in that**
a support frame (12) for supporting the at least one grid structure (7,8), in particular at least in sections in the at least one inlet chamber (16,17), is provided and that, preferably, the support frame (12) supports at least substantially the entire weight of the at least one grid structure (7,8) and the at least one filter layer (5,6) on the floor (15) of the filter module (2) and/or the support frame (12) carries at least one lower grid structure (7) and one upper grid structure (8) and extends through the filter layer (5) supported by the lower grid structure (7) as well as at least substantially through the inlet chamber (17) arranged below the upper grid structure (8).

10. Biofilter according to claim 9,
**characterized in that**
the support frame (12) is formed at least substantially from a steel material, in particular a galvanized steel material, a stainless steel material and/or a plasticcoated steel material, a plastic, in particular polyethylene and/or polypropylene, from wood or a wood-based material, preferably from softwood, and/or that the support frame (12) is formed as a tubular frame.

11. Biofilter according to one of claims 1 to 10,
**characterized in that**
the at least one filter layer (5,6) is associated with at least one humidification device (19,20) for humidifying the filter layer (5,6) and that, preferably, the at least one humidification device (19,20) comprises at least one nozzle (21) for applying a humidification fluid containing water to the filter layer (5,6).

12. Biofilter according to claim 11,
**characterized in that**
the filter module (2) comprises at least one lower filter layer (5) and at least one upper filter layer (6) and that at least one supply line (23) of the humidification device (19) associated with the lower filter layer (5) extends at least partially, in particular at least substantially in the vertical direction (RV), through the upper filter layer (6) and that, preferably, the at least one nozzle (21) associated with the lower filter layer (5) is held at the at least one supply line (23), in particular in a suspended manner, and/or in the inlet chamber of the upper filter layer.

13. Biofilter according to claim 12,
**characterized in that**
the at least one supply line (23) is arranged in sections in at least one conduit shaft (25) extending at least substantially through the upper filter layer (6), in particular formed by a pipe and/or a hose, and that, preferably, the at least one nozzle (21) associated with the lower filter layer (5) is guided through the at least one conduit shaft (25).

14. Biofilter according to claim 12 or 13,
**characterized in that**
as part of the biofilter (1) a control device (26) for controlling the at least one humidification device (19,20), in particular depending on at least one moisture measurement value measured by at least one moisture sensor (27) as part of the biofilter (1), is provided and, preferably, the at least one moisture sensor (27) is configured for measuring the filter material moisture of the at least one filter layer (5,6) and/or that the at least one filter module (2), in particular at least substantially over the entire horizontal extent of the at least one filter layer (5,6), is formed open towards the top.

## Revendications

1. Biofiltre (1) pour purifier biologiquement un flux de gaz d'échappement ayant des substances indésirables, avec au moins un module de filtration (2) à traverser par le flux de gaz d'échappement, où le module de filtration (2) a au moins une couche filtrante (5,6) ayant un matériau filtrant organique et où la au moins une couche filtrante (5,6) est portée par au moins une structure de grille (7,8) orientée au moins essentiellement horizontalement,
**caractérisé en ce que**
la au moins une structure de grille (7,8) est formée par des éléments de grille (10) allongés disposés au moins essentiellement à angle droit en croix et les uns sur les autres, orientés au moins essentiellement horizontalement et au moins essentiellement non reliés entre eux, sous forme de lattes de bois et de poutres en bois.

2. Biofiltre selon la revendication 1,
**caractérisé en ce que**
la au moins une structure de grille (7,8) est formée d'au moins deux, de préférence d'au moins trois, en particulier d'au moins quatre, couches de grille (29) disposées les unes sur les autres et orientées horizontalement.

3. Biofiltre selon l'une des revendications 1 ou 2,
**caractérisé en ce que**
les éléments de grille (9,10) de la au moins une structure de grille (7,8) et des couches de grille (29) se croisent au moins essentiellement à angle droit et/ou que dans la au moins une structure de grille (7,8) et dans les couches de grille (29), vu dans la direction verticale (RV), des ouvertures de grille (31) d'une largeur et longueur d'au moins 10 cm, de préférence d'au moins 15 cm, en particulier d'au moins 20 cm, et d'au plus 120 cm, de préférence d'au plus 80 cm, en particulier d'au plus 60 cm, sont prévues et/ou que
les éléments de grille (10) occupent au moins 20 % en volume, de préférence au moins 30 % en volume, en particulier au moins 35 % en volume, et au plus 70 % en volume, de préférence au plus 60 % en volume, en particulier au plus 55 % en volume, du volume de la au moins une structure de grille (7,8).

4. Biofiltre selon l'une des revendications 1 à 3,
**caractérisé en ce que**
les éléments de grille (10) de la au moins une structure de grille (7,8) ont respectivement une longueur d'au moins 80 cm, de préférence d'au moins 120 cm, en particulier d'au moins 160 cm, et d'au plus 10 m, de préférence d'au plus 8 m, en particulier d'au plus 6 m, et/ou une épaisseur (DGE) d'au moins 1 cm, de préférence d'au moins 2 cm, en particulier d'au moins 3 cm, et d'au plus 15 cm, de préférence d'au plus 10 cm, en particulier d'au plus 5 cm, et/ou une largeur (BGE) d'au moins 5 cm, de préférence d'au moins 10 cm, en particulier d'au moins 15 cm, et d'au plus 80 cm, de préférence d'au plus 60 cm, en particulier d'au plus 40 cm.

5. Biofiltre selon l'une des revendications 1 à 4,
**caractérisé en ce que**
la au moins une couche filtrante (5,6) est formée en tant que couche en vrac et/ou que le matériau filtrant de la au moins une couche filtrante (5,6) comprend des copeaux de bois, en particulier des copeaux de bois résineux, du paillis d'écorce, de la tourbe fibreuse, des fibres de coco, du bois de racine déchiqueté, du compost de déchets organiques, de la bruyère, de la laine de bois et/ou des granulés de bois.

6. Biofiltre selon l'une des revendications 1 à 5,
**caractérisé en ce que**
entre la au moins une couche filtrante (5,6) et la au moins une structure de grille (7,8), une couche de support (11) ayant une pluralité d'ouvertures de passage (30) pour supporter la couche filtrante (5,6) au-dessus de la structure de grille (7,8) est prévue et que, de préférence, la couche de support (11) est formée au moins essentiellement en métal ou en matière plastique, en particulier en polyéthylène ou en polypropylène, et/ou par au moins une grille, une grille perforée, un filet et/ou un tissu.

7. Biofiltre selon l'une des revendications 1 à 6,
**caractérisé en ce que**
la au moins une structure de grille (7,8) a une épaisseur de couche (DGS) d'au moins 20 cm, de préférence d'au moins 30 cm, en particulier d'au moins 40 cm, et d'au plus 100 cm, de préférence d'au plus 80 cm, en particulier d'au plus 60 cm, et/ou que la au moins une couche filtrante (5,6) a une épaisseur de couche (DFS) d'au moins 30 cm, de préférence d'au moins 40 cm, en particulier d'au moins 50 cm, et d'au plus 150 cm, de préférence d'au plus 125 cm, en particulier d'au plus 100 cm, et/ou que la au moins une couche de support (11) a une épaisseur de couche (DSS) d'au plus 5 cm, de préférence d'au plus 3 cm, en particulier d'au plus 1 cm.

8. Biofiltre selon l'une des revendications 1 à 7,
**caractérisé en ce que**
sous la au moins une structure de grille (7,8), une chambre d'entrée d'air (16,17) pour le flux de gaz d'échappement est prévue et, de préférence, la au moins une chambre d'entrée d'air (16,17) a une hauteur (HA) d'au moins 20 cm, de préférence d'au moins 30 cm, en particulier d'au moins 40 cm, et d'au plus 120 cm, de préférence d'au plus 100 cm, en particulier d'au plus 80 cm, et/ou que le au moins un module de filtration a au moins deux, de préférence au moins trois, couches filtrantes supportées respectivement par une structure de grille et, de préférence, entre les couches filtrantes et les structures de grille, une couche de support respective et/ou sous chaque structure de grille, une chambre d'entrée d'air est prévue.

9. Biofiltre selon l'une des revendications 1 à 8,
**caractérisé en ce que**
un châssis porteur (12) pour porter la au moins une structure de grille (7,8), en particulier au moins par sections dans la au moins une chambre d'entrée d'air (16,17), est prévu et que, de préférence, le châssis porteur (12) supporte au moins essentiellement la totalité du poids de la au moins une structure de grille (7,8) et de la au moins une couche filtrante (5,6) sur le fond (15) du module de filtration (2) et/ou le châssis porteur (12) porte au moins une structure de grille inférieure (7) et une structure de grille supérieure (8) et s'étend à travers la couche filtrante (5) portée par la structure de grille inférieure (7) ainsi qu'au moins essentiellement à travers la chambre d'entrée d'air (17) disposée en dessous de la structure de grille supérieure (8).

10. Biofiltre selon la revendication 9,
**caractérisé en ce que**
le châssis porteur (12) est formé au moins essentiellement en un matériau en acier, en particulier en un matériau en acier galvanisé, en un matériau en acier inoxydable et/ou en un matériau en acier revêtu de matière plastique, en une matière plastique, en particulier en polyéthylène et/ou en polypropylène, en bois ou en un matériau à base de bois, de préférence en bois résineux, et/ou que le châssis porteur (12) est formé en tant que châssis tubulaire.

11. Biofiltre selon l'une des revendications 1 à 10,
**caractérisé en ce que**
la au moins une couche filtrante (5,6) est associée à au moins un dispositif d'humidification (19,20) pour humidifier la couche filtrante (5,6) et que, de préférence, le au moins un dispositif d'humidification (19,20) a au moins une buse (21) pour appliquer un fluide d'humidification contenant de l'eau sur la couche filtrante (5,6).

12. Biofiltre selon la revendication 11,
**caractérisé en ce que**
le module de filtration (2) a au moins une couche filtrante inférieure (5) et au moins une couche filtrante supérieure (6) et que au moins une conduite d'alimentation (23) du dispositif d'humidification (19) associé à la couche filtrante inférieure (5) s'étend au moins partiellement, en particulier au moins essentiellement dans la direction verticale (RV), à travers la couche filtrante supérieure (6) et que, de préférence, la au moins une buse (21) associée à la couche filtrante inférieure (5) est maintenue à la au moins une conduite d'alimentation (23), en particulier de manière suspendue, et/ou dans la chambre d'entrée d'air de la couche filtrante supérieure.

13. Biofiltre selon la revendication 12,
**caractérisé en ce que**
la au moins une conduite d'alimentation (23) est disposée par sections dans au moins une gaine de conduite (25) s'étendant au moins essentiellement à travers la couche filtrante supérieure (6), en particulier formée par un tuyau et/ou un flexible, et que, de préférence, la au moins une buse (21) associée à la couche filtrante inférieure (5) est guidée à travers la au moins une gaine de conduite (25).

14. Biofiltre selon la revendication 12 ou 13,
**caractérisé en ce que**
comme partie du biofiltre (1), un dispositif de commande (26) pour commander le au moins un dispositif d'humidification (19,20), en particulier en fonction d'au moins une valeur de mesure d'humidité mesurée par au moins un capteur d'humidité (27) comme partie du biofiltre (1), est prévu et, de préférence, le au moins un capteur d'humidité (27) est configuré pour mesurer l'humidité du matériau filtrant de la au moins une couche filtrante (5,6) et/ou que le au moins un module de filtration (2), en particulier au moins essentiellement sur toute l'étendue horizontale de la au moins une couche filtrante (5,6), est formé ouvert vers le haut.
